# DEMANDE DE BREVET EUROPEEN

(11) **EP 4 703 790 A1**
(43) Date de publication de la demande: **04.03.2026**
(21) Numéro de dépôt: 24197112.6
(22) Date de dépôt: 28.08.2024
(51) Int. Cl.: G03B 15/06

(54) **DISPOSITIF D'ILLUMINATION POUR LA PRISE DE VUE D'OBJETS**

(71) Demandeur: Visiodome SA, 1227 Carouge (CH)
(72) Inventeur: HENRY, Raphaël, 1227 Carouge (CH)
(74) Mandataire: ABREMA SA

(57) **Abrégé**

Il est décrit un dispositif d'illumination (10) pour la prise de vue d'objets comprenant un corps (CP) muni d'un système d'illumination (ILM) destiné à illuminer un objet à examiner, le dispositif d'illumination (10) comportant une caméra digitale (CD) pour la prise de vue de l'objet à examiner illuminé par le système d'illumination (ILM). Le corps (CP) est apte à recevoir un dispositif de prise de vue portatif ad-hoc, par exemple un smartphone (SP), le corps (CP) comprenant un orifice de prise de vue (AP) agencé de sorte à être sensiblement aligné avec un objectif du dispositif de prise de vue portatif ad-hoc (SP), une fois positionné sur le corps (CP). Le corps (CP) est par ailleurs pourvu d'une trappe mobile (TM) sur laquelle est montée la caméra digitale (CD), ladite trappe mobile (TM) pouvant occuper au moins deux positions, à savoir une première position, ou position de travail, dans laquelle la trappe mobile (TM) recouvre l'orifice de prise de vue (AP) de sorte à ce qu'un objectif (OB) de la caméra digitale (CD) soit aligné avec l'orifice de prise de vue (AP), et au moins une seconde position, ou position retirée, dans laquelle la trappe mobile (TM) place la caméra digitale (CD) dans une position en retrait de sorte à libérer l'orifice de prise de vue (AP) et permettre l'alignement de l'objectif du dispositif de prise de vue portatif ad-hoc (SP) avec l'orifice de prise de vue (AP).

## Description

### DOMAINE TECHNIQUE

La présente invention se rapporte de manière générale à un dispositif d'illumination pour la prise de vue d'objets, en particulier pour la prise de vue de pièces d'horlogerie et/ou de joaillerie.

### ARRIÈRE-PLAN TECHNOLOGIQUE

Divers dispositifs d'illumination pour la prise de vue d'objets sont connus dans le domaines de la photographie et vidéographie.

L'on connait notamment de tels dispositifs se présentant sous la forme d'un caisson, d'une boîte ou d'une malle définissant un espace sensiblement fermé à l'intérieur duquel peut être disposé l'objet dont on souhaite effectuer la prise de vue. Des exemples de tels dispositifs sont notamment décrits dans les demandes internationales No. WO 2022/162044 A1, WO 2022/128061 A1 et WO 2022/128225 A1.

La demande internationale No. WO 2022/162044 A1 décrit plus particulièrement un caisson lumineux pour la photographie et la vidéographie qui intègre un système d'illumination et de visualisation incluant un diffuseur de lumière permettant de diffuser efficacement la lumière à l'intérieur du volume de travail défini par le caisson. Le système d'illumination et de visualisation comporte typiquement une caméra digitale montée à l'intérieur du caisson afin d'assurer la prise de vue photographique ou vidéographique de l'objet disposé à l'intérieur du caisson, tout en permettant à l'objet d'être manipulé par l'opérateur en regard de la caméra digitale. Les images prises par la caméra digitale sont typiquement transmises à une tablette numérique disposée sur le caisson (ou tout autre dispositif analogue, tel un smartphone ou ordinateur portable) en vue d'être partagées et retransmises à des spectateurs, par exemple en direct (voire en différé), en particulier par streaming vidéo via un réseau de retransmission informatique. Dans une variante, il est évoqué la possibilité de prévoir en outre une ouverture menant depuis l'extérieur du caisson jusqu'à l'intérieur du volume de travail afin de permettre l'utilisation d'une caméra externe, telle une caméra externe dédiée ou la caméra intégrée d'un smartphone ou d'une tablette numérique. Un dispositif mettant en oeuvre l'objet de la demande internationale No. WO 2022/162044 A1 est notamment commercialisé par la présente Demanderesse sous la désignation « VISIODOME » et devenu d'usage courant dans le domaine de l'horlogerie et de la joaillerie afin de permettre la présentation à distance de pièces d'horlogerie ou de joaillerie dans des conditions de prise de vue stables et de qualité.

La solution susmentionnée est raisonnablement satisfaisante, en particulier s'agissant des conditions d'illumination et de prise de vue, mais elle souffre de certaines limitations, en particulier le fait que la caméra digitale est installée à demeure à l'intérieur du caisson .

La demande internationale No. WO 2015/132785 A1 décrit un dispositif d'illumination pour la prise de vue d'objets de petite taille, tels que des pierres précieuses, des diamants, des bijoux, pièces de monnaie ou autres objets analogues. Ce dispositif comporte une base supportant une chambre d'illumination comportant une plateforme rotative susceptible d'accueillir l'objet à examiner à l'intérieur du volume de travail de la chambre d'illumination, ainsi qu'un support jouxtant la chambre d'illumination, lequel support est configuré pour accueillir un smartphone et positionner l'objectif de la caméra intégrée de ce smartphone en regard d'une ouverture communiquant avec le volume de travail de la chambre d'illumination. La chambre d'illumination est constituée d'une partie supérieure et d'une partie inférieure, la partie inférieure étant supportée par la base du dispositif, alors que la partie supérieure est articulée sur la partie inférieure de sorte à pouvoir être basculée et permettre d'accéder à la plateforme rotative sur laquelle est positionné l'objet à examiner. Une source lumineuse ainsi qu'un élément diffuseur de lumière (ou « softring ») sont par ailleurs disposés à l'intérieur de la chambre d'illumination. Le dispositif d'illumination est ainsi conçu de manière à permettre la disposition d'un smartphone sur le support prévu à cet effet de manière à opérer une prise de vue de l'objet disposé à l'intérieur de la chambre d'illumination, sur la plateforme rotative.

La solution décrite dans la demande internationale No. WO 2015/132785 A1 présente l'inconvénient de ne permettre la prise de vue que d'objets de petite taille susceptibles d'être disposés à l'intérieur du volume de travail relativement limité de la chambre d'illumination. La configuration du dispositif est par ailleurs telle qu'elle nécessite d'adapter la géométrie du support pour smartphone à la configuration particulière du smartphone utilisé, ce qui rend cette solution peut flexible en pratique. De plus, ce dispositif d'illumination, bien que portatif, a uniquement vocation à être disposé sur un plan de travail, sensiblement horizontal, de sorte à permettre une exploitation adéquate de la plateforme rotative. Enfin, cette solution rend de facto impossible toute manipulation de l'objet une fois la chambre d'illumination fermée, seule la plateforme rotative pouvant être utilisée pour mettre en rotation l'objet à examiner en regard de la caméra intégrée du smartphone.

Une autre solution analogue est décrite dans la demande de brevet américain No. US 2021/0240054 A1, le dispositif d'illumination étant ici par ailleurs pourvu d'un mécanisme à coulissement permettant d'ajuster l'alignement entre l'objectif de la caméra intégrée du smartphone et l'orifice de prise de vue du dispositif d'illumination. Bien que présentant la possibilité d'ajuster la position du smartphone par rapport au dispositif d'illumination, le mécanisme à coulissement rajoute inutilement de la complexité. Cette solution souffre au demeurant sensiblement des mêmes limitations que la solution décrite dans la demande internationale No. WO 2015/132785 A1.

Il subsiste donc un réel besoin pour un dispositif d'illumination apte à permettre la prise de vue d'objets qui remédie aux inconvénients et limitations des solutions connues.

### EXPOSÉ DE L'INVENTION

Un but général de la présente invention est de remédier aux divers problèmes et limitations des dispositifs d'illumination pour la prise de vue d'objets de l'état de la technique.

Plus particulièrement, un but de la présente invention est de proposer une telle solution qui soit plus flexible à l'utilisation et qui allie la possibilité de prendre des prises de vue de l'objet souhaité indifféremment au moyen d'une caméra digitale du dispositif d'illumination ou au moyen d'un dispositif de prise de vue portatif ad-hoc, tel un smartphone ou une tablette numérique intégrant une caméra, voire un appareil photo numérique, ou tout autre dispositif de prise de vue portatif ad-hoc.

Un autre but de la présente invention est de proposer une telle solution qui soit en particulier compatible avec l'utilisation d'une variété de dispositifs de prise de vue portatif ad-hoc.

Encore un autre but de la présente invention est de proposer une telle solution qui permette d'assurer un niveau d'illumination optimal de l'objet à examiner, quel que soit le dispositif de prise de vue utilisé.

Encore un autre but de la présente invention est de proposer une telle solution qui soit raisonnablement aisée à mettre en oeuvre.

La présente invention répond à une partie au moins de ces buts en proposant un dispositif d'illumination pour la prise de vue d'objets dont les caractéristiques sont énumérées dans la revendication 1.

Des variantes de réalisation avantageuses et/ou préférées de l'invention font l'objet des revendications dépendantes.

D'autres aspects et avantages de l'invention sont exposés dans la suite de la présente description.

### DESCRIPTION SOMMAIRE DES DESSINS

Les caractéristiques et avantages de la présente invention apparaîtront plus clairement à la lecture de la description détaillée qui suit de modes de réalisation de l'invention, lesquels sont présentés uniquement à titre d'exemples non limitatifs et sont illustrés par les dessins annexés où :
- la Figure 1A est une vue en perspective schématique d'un dispositif d'illumination selon un mode de réalisation préféré de l'invention, le dispositif d'illumination étant illustré dans une configuration apte à faciliter le transport ;
- la Figure 1B est une vue en perspective schématique du dispositif d'illumination de la Figure 1A illustrant le dispositif d'illumination dans une seconde configuration où une trappe mobile du dispositif d'illumination est placée dans une position retirée afin de libérer un orifice de prise de vue ;
- la Figure 1C est une vue en perspective schématique du dispositif d'illumination des Figures 1A-B illustrant le possible placement d'un dispositif de prise de vue portatif ad-hoc, en particulier un smartphone avec caméra intégrée, en regard de l'orifice de prise de vue ;
- la Figure 2A est une vue de face du dispositif d'illumination des Figures 1A-C dans sa configuration telle qu'illustrée dans les Figures 1B-C ;
- la Figure 2B est une vue latérale du dispositif d'illumination de la Figure 2A ;
- la Figure 2C est une vue en coupe transversale du dispositif d'illumination des Figures 2A-B prise selon le plan de coupe vertical A-A reporté sur la Figure 2B ; et
- la Figure 2D est une vue de dessus du dispositif d'illumination des Figures 2A-C.

### MODES DE RÉALISATION DE L'INVENTION

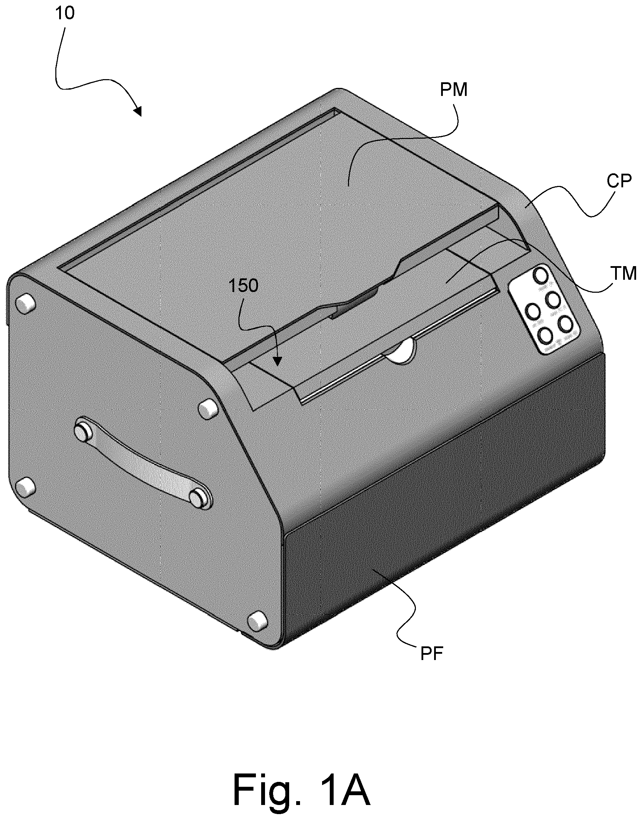

La présente invention sera décrite en référence à divers modes et variantes de réalisation tels qu'illustrés notamment par les Figures 1A-C à 2A-D.

L'on comprendra que la portée de l'invention englobe toutes les combinaisons et sous-combinaisons des caractéristiques de l'invention décrites ici telles que définies par les revendications annexées.

Les Figures 1A-C sont des vues en perspective schématiques d'un dispositif d'illumination, désigné globalement par la référence numérique 10, selon un mode de réalisation préféré de l'invention. La configuration de ce dispositif d'illumination 10 est globalement analogue à celle du dispositif d'illumination décrit dans la demande internationale No. WO 2022/162044 A1 au nom de la Demanderesse, dont le contenu est incorporé ici par référence. Dans le cas d'espèce, le dispositif d'illumination 10 présente généralement l'apparence d'un caisson ou d'une malle comportant un corps CP formant ici boîtier et définissant un volume de travail intérieur 200 sensiblement fermé dans lequel un objet à examiner, non représenté, (telle une pièce d'horlogerie ou de joaillerie) est manipulable par un opérateur. Dans l'exemple illustré, ce volume de travail intérieur 200 est délimité par un fond, des parois ou panneaux latéraux, ainsi qu'une partie supérieure du corps CP. Le volume de travail intérieur 200 est sensiblement fermé en ce que le corps CP présente au moins une ouverture OF dimensionnée afin de permettre à l'opérateur de passer au moins une main au-travers de l'ouverture OF, dans le volume de travail intérieur 200.

L'ouverture OF s'étend ici avantageusement sur sensiblement toute la largeur d'une partie frontale du corps CP et est au moins partiellement (préférablement complètement) refermable au moyen d'un panneau mobile PF, ici monté de manière pivotante sur le corps CP, comme illustré. Selon une variante de réalisation, le panneau mobile PF pourrait être omis, réalisé en plusieurs parties, ou n'obturer que partiellement l'ouverture OF. L'on pourrait également envisager de prévoir un tiroir amovible, incluant une partie au moins du fond du corps CP afin d'insérer ou retirer l'objet à examiner (telle une parure de bijoux).

Le corps CP peut être réalisé en tous matériaux adéquats, notamment en bois, métal, plastique ou matériau composite, voire une combinaison de ces matériaux. Le corps CP peut par ailleurs être revêtu au moins partiellement de tout revêtement adéquat, en particulier d'un revêtement de cuir (ou similicuir) ou de tissu.

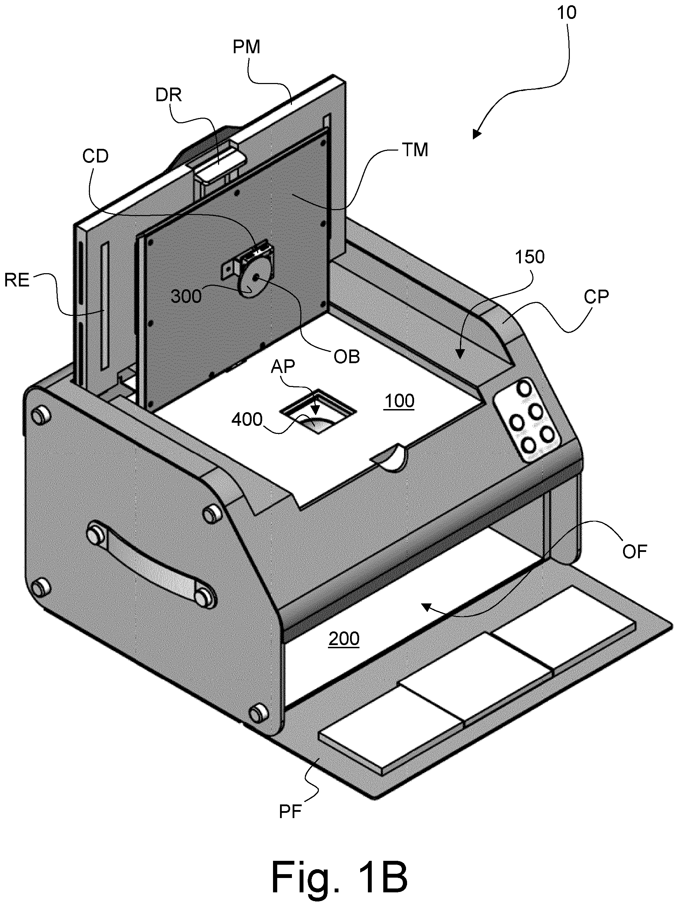

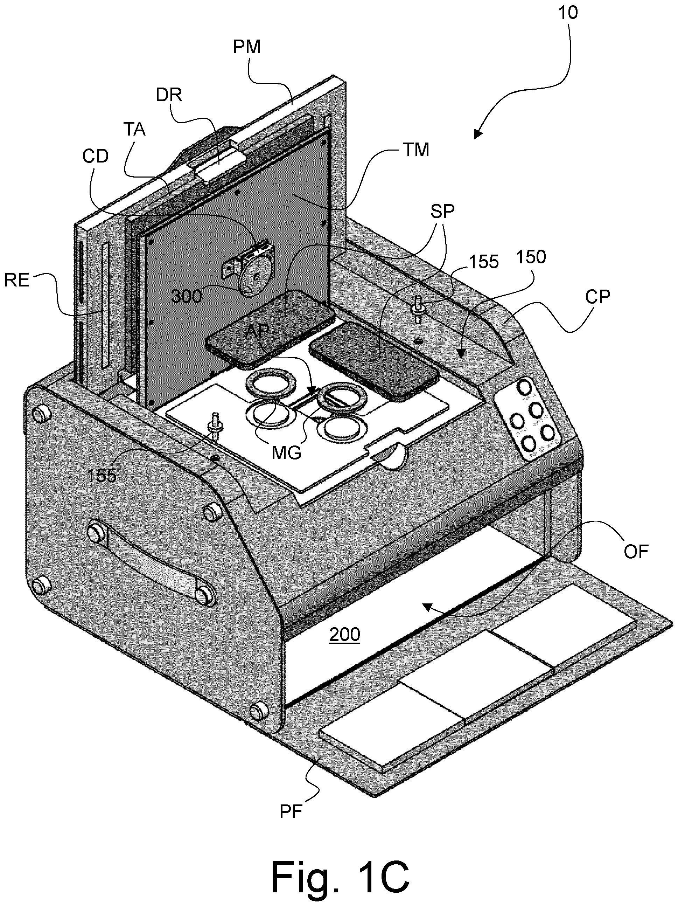

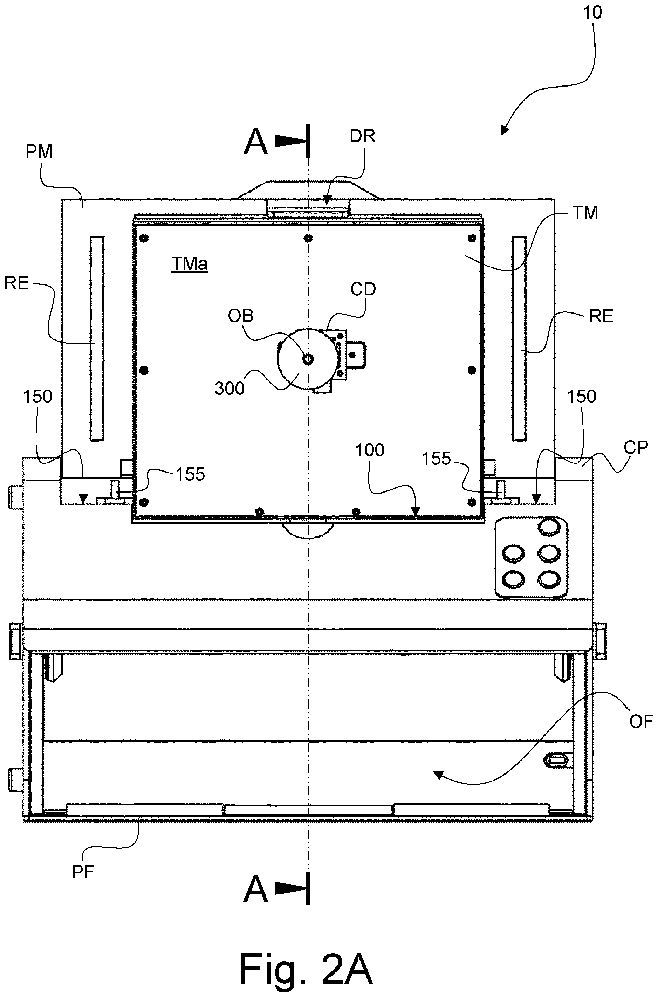

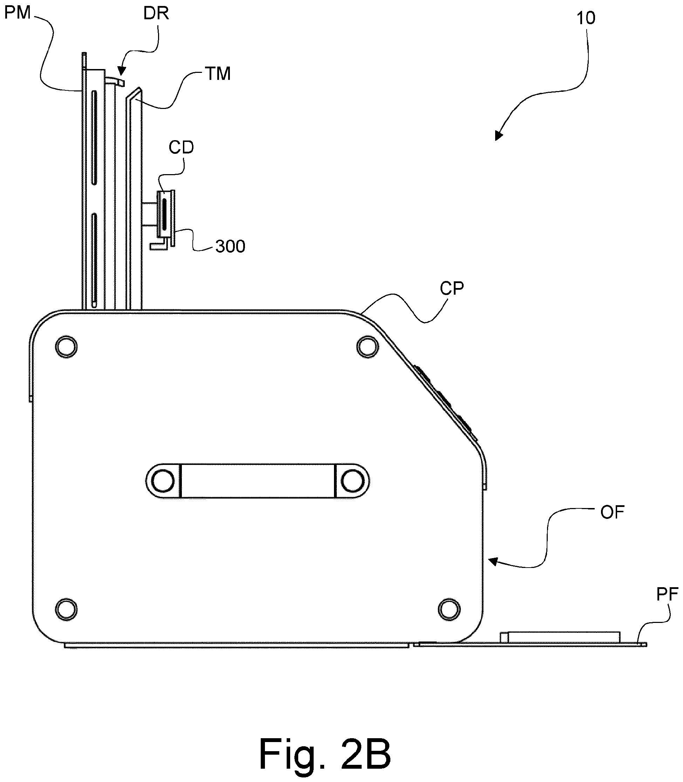

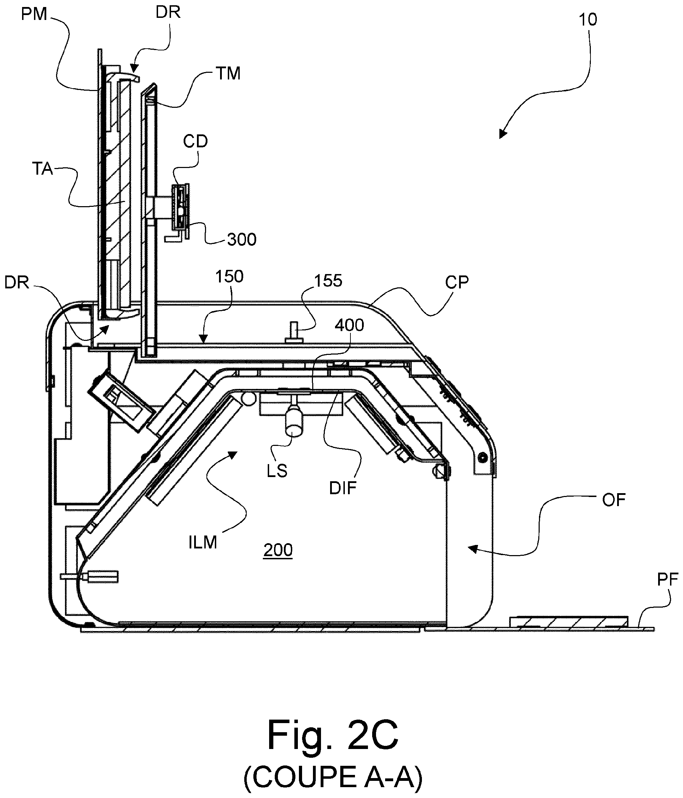

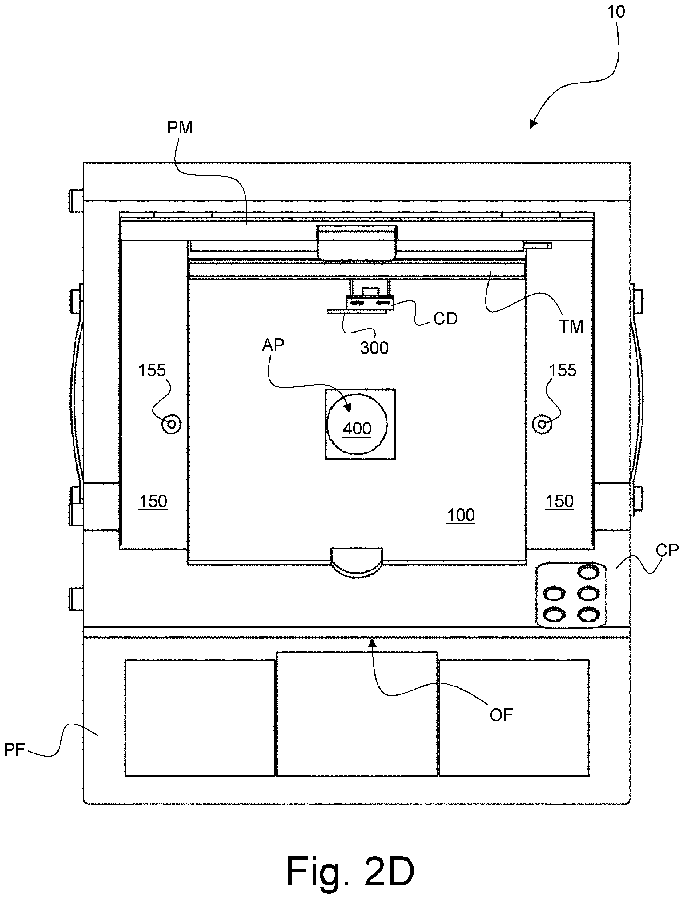

À l'image du dispositif d'illumination décrit dans la demande internationale No. WO 2022/162044 A1, le corps CP est muni un système d'illumination, désigné par la référence ILM, non visible dans les Figures 1A-C car situé à l'intérieur du corps CP de manière à assurer une illumination adéquate de l'objet à examiner (lequel système d'illumination ILM est visible en partie dans la vue en coupe de la Figure 2C). Le dispositif d'illumination 10 comporte par ailleurs une caméra digitale CD, visible dans les Figures 1B et 1C (ainsi que dans les Figures 2A-D) pour la prise de vue de l'objet à examiner, illuminé par le système d'illumination ILM dans les conditions souhaitées.

Le système d'illumination ILM ne sera pas décrit en détail ici dans la mesure où il est déjà connu en tant que tel. L'on pourra ainsi se référer aux éléments déjà décrits à cet égard dans la demande internationale No. WO 2022/162044 A1. Il suffit de comprendre que le système d'illumination ILM comporte toute(s) source(s) lumineuse(s) adéquate(s), incluant pour l'illumination sous lumière blanche ou sous ultraviolet (notamment pour la mise en évidence d'un effet de phosphorescence sur certaines portions de pièces d'horlogerie, notamment des éléments pourvus de Super-Luminova^{®} ou d'autres pigments phosphorescents typiquement présents sur les cadrans ou lunettes de pièces d'horlogerie). Dans la pratique, le système d'illumination ILM comprend avantageusement une combinaison de diverses sources lumineuses, incluant notamment des lampes spots LS ainsi qu'un système permettant de produire une illumination diffuse comprenant classiquement une pluralité de sources lumineuses (telles des diodes électroluminescentes, ou « LED ») coopérant avec un élément diffuseur de lumière, désigné par la référence DIF. Cet élément diffuseur de lumière DIF peut en particulier être réalisée en un matériau acrylique type PMMA, tel que disponible sur le marché sous la désignation PERSPEX^{®} ou analogue (PERSPEX^{®} étant une marque enregistrée de Perspex International Limited (UK), société affiliée à 3A Composites). Le système d'illumination ILM peut comporter encore d'autres moyens d'illumination, notamment des moyens permettant d'induire un effet de scintillement sur l'objet à examiner, en particulier pour la mise en valeur de pierres précieuses ou semi-précieuses.

Le corps CP du dispositif d'illumination 10 est par ailleurs configuré de manière à pouvoir recevoir un dispositif de prise de vue portatif ad-hoc, tel un smartphone ou une tablette numérique pourvu(e) d'une caméra intégrée, ou un appareil photo numérique, le corps CP comprenant à cet effet un orifice de prise de vue AP agencé de sorte à être sensiblement aligné avec un objectif du dispositif de prise de vue portatif ad-hoc, une fois positionné sur le corps CP. À titre d'exemple, la Figure 1C montre schématiquement l'utilisation d'un smartphone SP comme dispositif de prise de vue portatif ad-hoc, illustré dans deux positions et orientations distinctes.

Selon l'invention, le corps CP est plus particulièrement pourvu d'une trappe mobile TM (éventuellement détachable) sur laquelle est montée la caméra digitale CD. Cette trappe mobile TM peut occuper au moins deux positions, à savoir une première position, ou position de travail, illustrée dans la Figure 1A, dans laquelle la trappe mobile TM recouvre l'orifice de prise de vue AP de sorte à ce qu'un objectif OB de la caméra digitale CD soit aligné avec l'orifice de prise de vue AP, et au moins une seconde position, ou position retirée, illustrée dans les Figures 1B et 1C (ainsi que dans les Figures 2A-D), dans laquelle la trappe mobile TM place la caméra digitale CD dans une position en retrait de sorte à libérer l'orifice de prise de vue AP et permettre l'alignement de l'objectif du dispositif de prise de vue portatif ad-hoc avec l'orifice de prise de vue AP.

L'on comprendra donc que l'invention permet avantageusement d'utiliser indifféremment la caméra digitale CD du dispositif d'illumination 10 ou le dispositif de prise de vue portatif ad-hoc afin d'effectuer des prises de vue photographiques ou vidéographiques de l'objet à examiner. Les images ainsi prises peuvent être retransmises à tout dispositif de visualisation associé, telle une tablette numérique TA disposée sur le corps CP (ou tout autre dispositif de visualisation) en vue d'être partagées et retransmises à des spectateurs, par exemple en direct (voire en différé), en particulier par streaming vidéo via un réseau de retransmission informatique.

Dans l'exemple illustré, la trappe mobile TM est avantageusement montée pivotante sur le corps CP de sorte à permettre un basculement entre les première et seconde positions. Le corps CP comporte ici en outre un panneau mobile PM monté pivotant sur le corps CP, le panneau mobile PM pouvant occuper au moins deux positions, à savoir une première position, ou position fermée, représentée dans la Figure 1A, dans laquelle le panneau mobile PM est rabattu sur le corps CP et recouvre la trappe mobile TM dans sa position de travail, et au moins une seconde position, ou position ouverte, représentée dans les Figures 1B et 1C (ainsi que dans les Figures 2A-D), dans laquelle le panneau mobile PM est déplacé hors de la trajectoire de la trappe mobile TM et permet le déplacement de la trappe mobile TM dans sa seconde position.

Ce panneau mobile PM assure avantageusement, dans sa seconde position, un support pour un dispositif de visualisation TA, tel une tablette numérique ou un écran de visualisation. La face interne du panneau mobile PM peut par ailleurs être pourvue, comme illustré, d'un dispositif de retenue DR apte à sélectivement retenir le dispositif de visualisation TA de manière amovible sur le panneau mobile PM. Il peut en particulier s'agir d'un système de pince (« clamp ») assurant une retenue latérale du dispositif de visualisation TA, par exemple par enserrage de portions inférieures et supérieures du dispositif de visualisation TA comme illustré dans la vue en coupe de la Figure 2C.

La face interne du panneau mobile PM peut encore être pourvue, comme illustré, d'un dispositif de rétroéclairage (comportant ici deux éléments de rétroéclairage RE placés sur des portions latérales de la face interne du panneau mobile PM) afin d'illuminer sélectivement le visage d'un opérateur exploitant le dispositif d'illumination 10.

Le corps CP est avantageusement configuré, au voisinage de l'orifice de prise de vue AP, de sorte à présenter une surface d'appui 100 apte à recevoir le dispositif de prise de vue portatif ad-hoc (notamment le smartphone SP susmentionné) dans une position stable. Dans l'exemple illustré, la surface d'appui 100 est sensiblement horizontale, mais elle pourrait éventuellement être inclinée. Cette surface d'appui 100 est préférablement pourvue d'un système de solidarisation assurant une retenue du dispositif de prise de vue portatif ad-hoc SP sur le corps CP. Dans l'exemple illustré, la surface d'appui 100 intègre une paire d'éléments magnétiques MG aptes à coopérer avec le smartphone SP afin d'en assurer la retenue. Il s'agit ici à titre illustratif d'éléments magnétiques annulaires compatibles avec le système MagSafe^{®} de Apple Inc. qui permettent avantageusement d'imposer une position prédéterminée au smartphone SP sur le corps CP. Bien que visibles dans la Figure 1C, l'on comprendra que ces éléments magnétiques MG (et leur support) peuvent avantageusement être dissimulés pour des raisons esthétiques sous un revêtement adéquat apposé sur la surface d'appui 100. En variante, le système de solidarisation pourrait comprendre, alternativement ou en combinaison, un ou plusieurs éléments mécaniques, tels des clips ou autres éléments de solidarisation mécaniques aptes à coopérer avec le smartphone SP (directement ou via une coque adaptatrice).

Le corps CP et la trappe mobile TM peuvent avantageusement être configurés de sorte que, dans la première position de la trappe mobile TM, le corps CP et la trappe mobile TM forment conjointement une surface de support 150 sensiblement plane. De la sorte, la trappe mobile TM ne compromet pas, dans sa position de travail, l'ergonomie ou l'esthétique d'ensemble du dispositif d'illumination 10.

À titre de perfectionnement, la surface de support 150, en particulier de part et d'autre de la trappe mobile TM, peut être configurée afin de recevoir des vis de fixation (amovibles) 155, en particulier des vis 1/4", pour un appareil photo numérique ou un support d'appareil photo numérique. Ces vis de fixation 155 peuvent en particulier être insérées sélectivement dans deux orifices prévus à cet effet dans la surface de support 150, comme illustré dans les Figures 1C et 2A-D.

À titre de raffinement, la face interne, désignée TMa, de la trappe mobile TM peut avantageusement être sensiblement réfléchissante de sorte que l'opérateur puisse se voir en réflexion.

Par ailleurs, il est envisageable de configurer le dispositif d'illumination 10 de sorte que la fonction de la caméra digitale CD soit automatiquement désactivée dès lors que la trappe mobile TM est placée dans sa seconde position, retirée. Alternativement, dans la seconde position de la trappe mobile TM, la caméra digitale CD pourrait rester fonctionnelle de manière à effectuer une prise de vue de l'opérateur.

De manière avantageuse, l'objectif OB de la caméra digitale CD peut être entouré d'une section 300 - ici de forme circulaire - agencée afin de venir se positionner, dans la première position de la trappe mobile TM, à l'intérieur d'une ouverture 400 pratiquée dans l'élément diffuseur de lumière DIF et obturer sensiblement cette ouverture 400. Cette section 300 peut par ailleurs être pourvue d'une zone de masquage destinée à atténuer la présence de l'objectif OB de la caméra digitale CD en réflexion sur l'objet à examiner, à l'image de ce qui est exposé en référence aux Figures 11 et 12 de la demande internationale No. WO 2022/162044 A1. Ceci étant dit, cette zone de masquage peut alternativement être réalisée partiellement ou totalement sur une face interne de l'élément diffuseur de lumière DIF, autour de la position de travail de l'objectif OB de la caméra digitale CD.

L'on comprendra de manière générale que diverses modifications et/ou améliorations évidentes pour l'homme du métier peuvent être apportées aux modes de réalisation décrits dans la présente description sans sortir du cadre de l'invention défini par les revendications annexées.

Par exemple, dans une variante de réalisation, le dispositif d'illumination pourrait présenter une forme autre que celle d'un caisson dont le corps définit un volume de travail intérieur sensiblement fermé. Le corps du dispositif d'illumination pourrait ainsi être éventuellement dépourvu de fond ou être équipé d'un fond amovible pouvant par exemple prendre la forme d'un tiroir amovible. Au titre de variante, le fond pourrait donc être détachable du reste du corps (voire omis complètement) de sorte à configurer le dispositif d'illumination à la manière d'une lampe manipulable à souhait par l'opérateur. L'invention englobe donc également toute déclinaison portative du dispositif d'illumination, avec ou sans fond.

Il est également envisageable de configurer la trappe mobile de manière à être sélectivement détachable du corps de sorte qu'elle puisse éventuellement être rangée séparément, avec la caméra digitale portée par cette trappe.

### LISTE DES SIGNES DE RÉFÉRENCE UTILISÉS DANS LA PRÉSENTE DESCRIPTION ET DANS LES DESSINS

- 10: dispositif d'illumination
- CP: corps du dispositif d'illumination 10
- 200: volume de travail intérieur du corps CP
- ILM: système d'illumination
- DIF: élément diffuseur de lumière du système d'illumination ILM
- LS: lampe spot du système d'illumination ILM
- PM: panneau mobile supérieur monté sur le corps CP (en particulier de manière pivotante)
- DR: dispositif de retenue pour dispositif de visualisation TA (par exemple système de pince pour retenue latérale du dispositif de visualisation TA)
- RE: dispositifs de rétroéclairage (par exemple à LED)
- TM: trappe mobile montée sur le corps CP (en particulier de manière pivotante)
- TMa: face interne réfléchissante de la trappe mobile TM
- CI: caméra digitale du dispositif d'illumination 10
- OB: objectif de la caméra digitale CD
- 300: section entourant l'objectif OB de la caméra digitale CD / section pourvue d'une zone de masquage destinée à atténuer la présence de l'objectif OB de la caméra digitale CD en réflexion sur l'objet à examiner
- 400: ouverture pratiquée dans l'élément diffuseur de lumière DIF et conformée afin de recevoir et être obturée par la section 300 (dans la position de travail de la trappe mobile TM)
- PF: panneau mobile frontal monté sur le corps CP (en particulier de manière pivotante)
- OF: ouverture frontale donnant accès au volume de travail intérieur 200
- AP: orifice de prise de vue pratiqué au travers du corps CP (et de l'élément diffuseur de lumière DIF)
- 100: surface d'appui pratiquée au voisinage de l'orifice de prise de vue AP
- MG: éléments magnétiques (par exemple compatibles avec système MagSafe^{®} de Apple Inc.) pour retenue et positionnement du smartphone SP (système de solidarisation)
- 150: surface de support
- 155: vis de fixation (en particulier vis 1/4") pour recevoir un appareil photo numérique ou support d'appareil photo numérique (montées amovibles sur surface de support 150)
- SP: smartphone avec caméra intégrée (dispositif de prise de vue portatif ad-hoc)
- TA: dispositif de visualisation (par exemple tablette numérique ou écran de visualisation)

## Revendications

1. Un dispositif d'illumination (10) pour la prise de vue d'objets comprenant un corps (CP) muni d'un système d'illumination (ILM) destiné à illuminer un objet à examiner, le dispositif d'illumination (10) comportant une caméra digitale (CD) pour la prise de vue de l'objet à examiner illuminé par le système d'illumination (ILM),
le corps (CP) étant apte à recevoir un dispositif de prise de vue portatif ad-hoc (SP), le corps (CP) comprenant un orifice de prise de vue (AP) agencé de sorte à être sensiblement aligné avec un objectif du dispositif de prise de vue portatif ad-hoc (SP), une fois positionné sur le corps (CP),
**caractérisé en ce que** le corps (CP) est par ailleurs pourvu d'une trappe mobile (TM) sur laquelle est montée la caméra digitale (CD), ladite trappe mobile (TM) pouvant occuper au moins deux positions, à savoir une première position, ou position de travail, dans laquelle la trappe mobile (TM) recouvre l'orifice de prise de vue (AP) de sorte à ce qu'un objectif (OB) de la caméra digitale (CD) soit aligné avec l'orifice de prise de vue (AP), et au moins une seconde position, ou position retirée, dans laquelle la trappe mobile (TM) place la caméra digitale (CD) dans une position en retrait de sorte à libérer l'orifice de prise de vue (AP) et permettre l'alignement de l'objectif du dispositif de prise de vue portatif ad-hoc (SP) avec l'orifice de prise de vue (AP).

2. Le dispositif d'illumination (10) selon la revendication 1, **caractérisé en ce que** la trappe mobile (TM) est montée pivotante sur le corps (CP) de sorte à permettre un basculement entre les première et seconde positions.

3. Le dispositif d'illumination (10) selon la revendication 2, **caractérisé en ce que** le corps (CP) comporte un panneau mobile (PM) monté pivotant sur le corps (CP), le panneau mobile (PM) pouvant occuper au moins deux positions, à savoir une première position, ou position fermée, dans laquelle le panneau mobile (PM) est rabattu sur le corps (CP) et recouvre la trappe mobile (TM) dans sa position de travail, et au moins une seconde position, ou position ouverte, dans laquelle le panneau mobile (PM) est déplacé hors de la trajectoire de la trappe mobile (TM) et permet le déplacement de la trappe mobile (TM) dans sa seconde position.

4. Le dispositif d'illumination (10) selon la revendication 3, **caractérisé en ce que** le panneau mobile (PM) assure, dans sa seconde position, un support pour un dispositif de visualisation (TA), tel une tablette numérique ou un écran de visualisation,
et **en ce qu'**une face interne du panneau mobile (PM) est préférablement pourvue d'un dispositif de retenue (DR) apte à sélectivement retenir le dispositif de visualisation (TA) de manière amovible sur le panneau mobile (PM).

5. Le dispositif d'illumination (10) selon l'une quelconque des revendications précédentes, **caractérisé en ce que** le corps (CP) est configuré, au voisinage de l'orifice de prise de vue (AP), de sorte à présenter une surface d'appui (100) apte à recevoir le dispositif de prise de vue portatif ad-hoc (SP) dans une position stable.

6. Le dispositif d'illumination (10) selon la revendication 5, **caractérisé en ce que** la surface d'appui (100) est pourvue d'un système de solidarisation (MG) assurant une retenue du dispositif de prise de vue portatif ad-hoc (SP) sur le corps (CP).

7. Le dispositif d'illumination (10) selon la revendication 6, **caractérisé en ce que** le système de solidarisation (MG) comprend un ou plusieurs éléments magnétiques (MG) et/ou un ou plusieurs éléments mécaniques aptes à coopérer avec le dispositif de prise de vue portatif ad-hoc (SP) afin d'en assurer la retenue.

8. Le dispositif d'illumination (10) selon la revendication 7, **caractérisé en ce que** le système de solidarisation (MG) est agencé de sorte à imposer une position prédéterminée et/ou une orientation prédéterminée au dispositif de prise de vue portatif ad-hoc (SP) sur le corps (CP).

9. Le dispositif d'illumination (10) selon l'une quelconque des revendications précédentes, **caractérisé en ce que** le corps (CP) et la trappe mobile (TM) sont configurés de sorte que, dans la première position de la trappe mobile (TM), le corps (CP) et la trappe mobile (TM) forment conjointement une surface de support (150) sensiblement plane.

10. Le dispositif d'illumination (10) selon la revendication 9, **caractérisé en ce que** la surface de support (150) est configurée afin de recevoir des vis de fixation (155), en particulier des vis 1/4", pour un appareil photo numérique ou support d'appareil photo numérique.

11. Le dispositif d'illumination (10) selon l'une quelconque des revendications précédentes, **caractérisé en ce que** le corps (CP) définit un volume de travail intérieur (200) sensiblement fermé dans lequel l'objet à examiner est manipulable par un opérateur, le corps (CP) présentant au moins une ouverture (OF) dimensionnée afin de permettre à l'opérateur de passer au moins une main au-travers de l'ouverture (OF).

12. Le dispositif d'illumination (10) selon la revendication 11, **caractérisé en ce que** l'ouverture (OF) s'étend sur sensiblement toute la largeur d'une partie frontale du corps (CP).

13. Le dispositif d'illumination (10) selon la revendication 11 ou 12, **caractérisé en ce que** l'ouverture (OF) est au moins partiellement refermable au moyen d'un panneau mobile (PF), préférablement un panneau mobile (PF) monté sur le corps (CP), en particulier de manière pivotante.

14. Le dispositif d'illumination (10) selon l'une quelconque des revendications précédentes, **caractérisé en ce qu'**une face interne (TMa) de la trappe mobile (TM) est sensiblement réfléchissante.

15. Le dispositif d'illumination (10) selon l'une quelconque des revendications précédentes, **caractérisé en ce que** le système d'illumination (ILM) comporte un élément diffuseur de lumière (DIF) apte à produire une illumination diffuse,
**en ce que** l'objectif (OB) de la caméra digitale (CD) est entouré d'une section (300) agencée afin de venir se positionner, dans la première position de la trappe mobile (TM), à l'intérieur d'une ouverture (400) pratiquée dans l'élément diffuseur de lumière (DIF) et obturer sensiblement cette ouverture (400),
et **en ce que** la section (300) est préférablement pourvue d'une zone de masquage destinée à atténuer la présence de l'objectif (OB) de la caméra digitale (CD) en réflexion sur l'objet à examiner.
